# FASCICULE DE BREVET EUROPEEN

(11) **EP 0 905 946 B1**
(45) Date de publication et mention de la délivrance du brevet: **09.11.2005**
(21) Numéro de dépôt: 98402317.6
(22) Date de dépôt: 21.09.1998
(51) Int. Cl.: H04L 25/49, H04L 7/033

(54) **Commande d'échantillonnage d'un signal biphase**
Reglung der Abtastung von Biphasensignalen
Control of the sampling of biphase signals

(30) Priorité: 24.09.1997 FR 9711864
(43) Date de publication de la demande: 31.03.1999
(73) Titulaire: STMicroelectronics S.A., 92120 Montrouge (FR)
(72) Inventeur: Tournier, Christian, 38170 Seyssinet-Pariset (FR)
(74) Mandataire: Casalonga, Axel

(56) Documents cités:
- EP-A- 0 707 391
- EP-A- 0 773 653
- US-A- 5 491 713

## Description

L'invention concerne l'échantillonnage d'un signal comportant une succession de transitions de niveau représentatives d'un codage bi-phase d'informations binaires.

L'invention s'applique avantageusement mais non limitativement à l'échantillonnage d'un signal vidéo en vue d'en extraire les informations numériques qu'il contient.

Au sens de la présente invention, un codage bi-phase est un codage dont certaines au moins des informations binaires sont codées au moyen d'impulsions dont la durée d'impulsion est égale à la période de transmission de ces informations binaires, et qui présentent une inversion de polarité (transition) au milieu de ladite durée d'impulsion c'est-à-dire au milieu de l'information binaire transmise.

Plus précisément, on peut citer à cet égard le code connu par l'homme du métier sous la dénomination "code Manchester" qui génère des transitions pour chaque élément d'information binaire, quelle que soit la séquence émise. Un "1" logique dans ce code est codé en une impulsion rectangulaire dont la durée est égale à la période de transmission, avec inversion de polarité au milieu du bit, la première moitié étant de signe positif. Un "0" logique est codé en une impulsion de durée identique mais de polarité opposée. Un dispositif pour décoder un tel signal est connu du document EP-A-0 773 653.

Un autre code dit "bi-phase" est connu par l'homme du métier sous la dénomination "code de Miller". Selon ce code, un "1" logique est codé en utilisant une impulsion du type Manchester, c'est-à-dire une impulsion rectangulaire avec inversion de polarité au milieu du bit tandis qu'un "0" logique est codé en utilisant une impulsion rectangulaire sans changement de polarité. La polarité des impulsions correspondant à l'émission d'un "1" logique est choisie de façon à garantir une continuité avec l'impulsion précédente. Quant à la polarité des impulsions correspondant à l'émission d'un "0" logique, elle assure une continuité (non-transition) après un "1" logique, mais elle est inversée après un "0" précédent. Aussi, dans ce code, le signal contient une transition au plus toutes les deux durées bit, ce qui assure suffisamment de transitions pour la récupération du flot de données.

On connaît actuellement plusieurs méthodes pour échantillonner un tel signal.

Une première méthode consiste à utiliser un système analogique s'appuyant sur un asservissement de phase et de fréquence, utilisant une boucle à verrouillage de phase, ce qui permet l'obtention d'un signal d'horloge qui est asservi sur la fréquence de transmission des données et qui est en phase avec les transitions de ces mêmes données. Cependant, cette méthode présente l'inconvénient d'utiliser une boucle à verrouillage de phase, qui est un système analogique, difficile à gérer et d'utilisation relativement coûteuse.

Une deuxième méthode consiste à utiliser un système réalisant dans une première étape la conversion analogique/numérique des données puis, dans un deuxième temps, le traitement de ses échantillons par un ou des algorithmes plus ou moins complexes de traitement du signal. Cette solution, si elle satisfait pleinement le critère de reproductibilité par son caractère fondamentalement numérique, ne permet par contre pas vraiment l'obtention d'une solution réellement économiquement intéressante, notamment lorsqu'elle est destinée à être intégrée dans des systèmes produits industriellement en grande quantité.

L'invention vise à apporter une solution à ce problème et à proposer un dispositif de commande d'échantillonnage, totalement numérique, n'utilisant donc pas de composant analogique du type boucle à verrouillage de phase, très simple à réaliser à un coût industriellement économique.

L'invention propose donc un dispositif de commande de l'échantillonnage d'un signal comportant une succession de transitions de niveau représentatives d'un codage bi-phase d'informations binaires transmises par ce signal selon une fréquence de transmission prédéterminée (par exemple 2,5 MHz).

Selon une caractéristique générale de l'invention, ce dispositif comprend
- des moyens de génération d'un signal d'horloge dit "de comptage" dont la fréquence est inférieure ou égale à n fois le double de la fréquence de transmission (par exemple 48 MHz pour n=10),
- des moyens de détection pour détecter les transitions du signal à ladite fréquence de comptage et délivrer des signaux de détection correspondants,
- des moyens de sélection pour recevoir chaque signal de détection et délivrer ou non un signal de sélection en fonction de la satisfaction ou non d'un critère de sélection prédéterminé, et
- des moyens de commande d'échantillonnage comportant des moyens de division de fréquence par n, recevant le signal d'horloge de comptage, ces moyens de commande d'échantillonnage étant aptes, à la réception de chaque signal de sélection, à délivrer un premier signal de commande d'échantillonnage après un retard temporel prédéterminé, inférieur à la moitié de la période de transmission des informations binaires (afin de ne pas masquer des transitions futures) et à délivrer, en l'absence de tout nouveau signal de sélection au cours d'une durée d'espacement égale à n fois la période de comptage, un deuxième signal de commande d'échantillonnage temporellement espacé du premier signal de commande d'échantillonnage de cette durée d'espacement.

Dans certaines applications dans lesquelles le signal porteur des données (informations binaires) n'a pas subi de distorsions jugées importantes, on peut ajuster le retard temporel à une valeur très faible, voire quasi nulle ou nulle. De même, on peut dans ce type d'application prévoir de délivrer un signal de sélection pour chaque signal de détection. En d'autres termes, on prendra alors en compte toutes les transitions détectées du signal.

Ceci étant, dans de nombreuses applications, le signal peut avoir subi des distorsions importantes lors de sa transmission, notamment lors d'une transmission hertzienne ou par câble, pouvant se combiner avec des phénomènes d'atténuation, de recombinaison d'échos de ce signal, d'ajout de perturbations externes ou de distorsions non linéaires en fréquence. Aussi, afin d'effectuer en quelque sorte un filtrage de ce bruit et des distorsions de données, on ajustera le retard temporel à une valeur prédéterminée. De même, afin d'éviter de réinitialiser le diviseur de fréquence sur des transitions trop proches les unes des autres et qui ne représentent pas des transitions issues du codage proprement dit des informations binaires, mais qui sont la conséquence de ces distorsions, on ne prendra avantageusement pas en compte des transitions ultérieures détectées mais trop proches d'une transition précédemment détectée.

Ainsi, en d'autres termes, l'invention prévoit d'utiliser un diviseur de fréquence recevant une fréquence fixe suffisamment élevée, ce diviseur étant réarmé à chaque transition de la donnée reçue (compte tenu éventuellement du filtrage évoqué ci-dessus) afin de délivrer au moins une impulsion d'horloge servant à échantillonner cette donnée, c'est-à-dire le signal porteur.

Alors que la fréquence du signal de comptage doit être inférieure à n fois le double de la fréquence de transmission, la limite inférieure de cette fréquence de comptage doit être ajustée compte tenu de la précision souhaitée pour l'application envisagée. Pour une précision maximale on choisira, pour n fixé, une fréquence du signal de comptage inférieure à n fois le double de la fréquence de transmission et supérieure à n-1 fois le double de la fréquence de transmission, et on choisira de préférence une fréquence située au voisinage inférieur de la limite supérieure de cet intervalle.

Selon un mode de réalisation de l'invention, les moyens de division de fréquence comportent un compteur modulo n, cadencé par le signal d'horloge de comptage, initialisable à une valeur initiale de comptage en présence de chaque signal de sélection. Chaque signal de commande d'échantillonnage est alors délivré à chaque fois que le compteur atteint une première valeur de comptage.

Le retard temporel est alors égal à un premier nombre prédéterminé de périodes du signal de comptage, la différence entre la première valeur de comptage et la valeur initiale de comptage correspondant à ce premier nombre prédéterminé de périodes.

Selon un mode de réalisation de l'invention, les moyens de sélection comportent des moyens aptes à comptabiliser la durée séparant deux transitions détectées consécutives, le critère de sélection consistant à vérifier que cette durée est supérieure ou égale à une durée de latence prédéterminée. Cette durée de latence est avantageusement égale à un deuxième nombre prédéterminé de périodes du signal de comptage. Les moyens de sélection comportent alors des moyens de comparaison aptes à comparer la valeur courante du compteur avec une deuxième valeur de comptage prédéterminée dont la différence avec la valeur initiale de comptage correspond à ce deuxième nombre prédéterminé de périodes.

Afin d'optimiser encore les performances du système, et d'être notamment moins sensible à des pics parasites se situant entre deux transitions utiles du signal et pouvant conduire à des valeurs d'échantillonnage fausses, les moyens de commande d'échantillonnage délivrent avantageusement plusieurs signaux de commande d'échantillonnage de façon à effectuer un suréchantillonnage du signal et à permettre la mise en oeuvre d'une logique majoritaire en aval pour une meilleure détermination de la valeur exacte du signal porteur.

D'autres avantages et caractéristiques de l'invention apparaîtront à l'examen de la description détaillée d'un mode de réalisation nullement limitatif, et des dessins annexés sur lesquels :
- la figure 1 est un synoptique schématique d'un dispositif de commande d'échantillonnage selon l'invention,
- la figure 2 illustre un mode de mise en oeuvre de l'invention appliqué à un codage bi-phase du type Manchester, et
- les figures 3 et 4 illustrent une autre mise en oeuvre de l'invention permettant une meilleure immunité vis-à-vis des distorsions éventuelles du signal porteur.

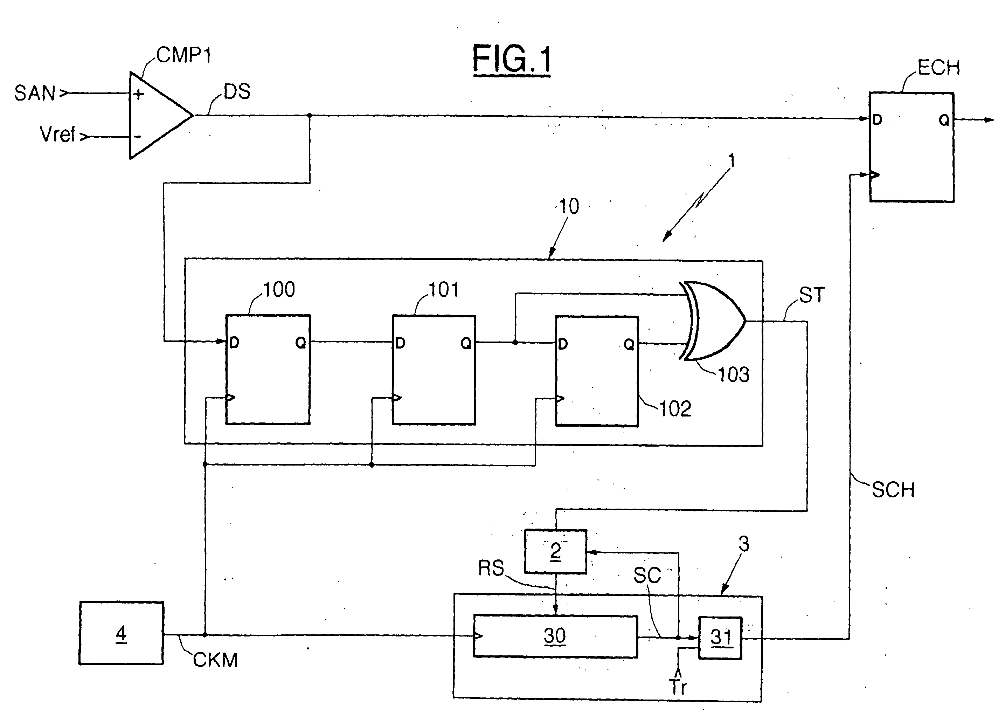

Sur la figure 1, un signal analogique SAN, par exemple un signal vidéo issu d'un magnétoscope, et contenant des informations numériques codées par un codage bi-phase, est délivré à une première entrée d'un comparateur CMP1 dont l'autre entrée reçoit une valeur de référence choisie Vref. La sortie de ce comparateur CMP1 délivre un signal porteur DS composé d'une succession de transitions de niveau représentatives du codage bi-phase des informations binaires.

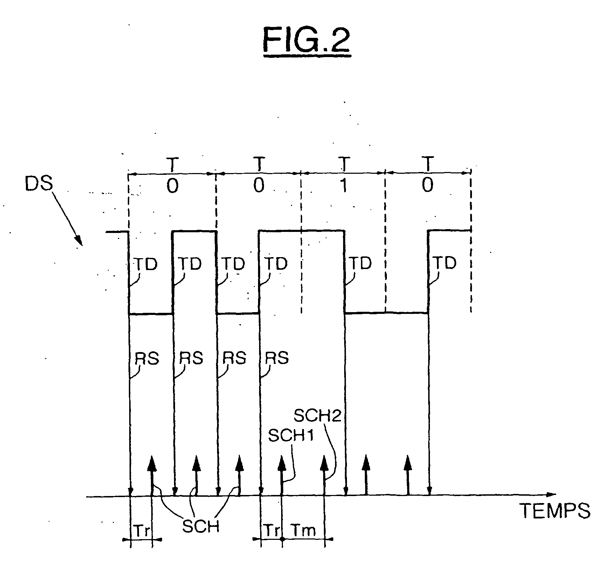

Un exemple d'un tel signal DS est illustré sur la partie haute de la figure 2 qui illustre un codage bi-phase du type Manchester.

Plus précisément, les informations binaires sont transmises périodiquement par le signal selon une fréquence de transmission F correspondant à une période de transmission T. A titre indicatif, la fréquence de transmission peut être égale à 2,5 MHz correspondant à une période T de 0,4 µs (durée de transmission de l'information binaire).

Comme illustré sur cette figure 2, un "1" logique dans ce code est codé en une impulsion rectangulaire de durée T avec inversion de polarité au milieu de l'information binaire, la première moitié étant de signe positif. Un "0" est codé en une impulsion identique mais de polarité opposée. On remarque donc que les transitions TD du signal DS sont espacées de la moitié T/2 de la période de transmission T, sauf lorsque deux informations binaires de valeur logiques différentes se succèdent. Dans ce cas, les deux transitions du signal DS sont espacées de la période de transmission T.

Si l'on revient maintenant plus particulièrement à la figure 1, on voit que le dispositif de commande d'échantillonnage 1 selon l'invention comporte des moyens de génération 4, par exemple un quartz, apte à générer un signal d'horloge dit "de comptage", CKM, dont la fréquence est choisie inférieure ou égale à n fois le double de la fréquence de transmission F. En pratique, n est un nombre entier suffisamment élevé, au moins supérieur ou égal à 3 et par exemple égal à 10. Dans le cas où la fréquence de transmission des informations binaires est égale à 2,5 MHz, correspondant à une fréquence maximale des transitions de 5 MHz, on choisira avantageusement pour le signal CKM une fréquence de comptage de 48 MHz.

Le dispositif 1 comporte également des moyens de détection 10 pour détecter les transitions TD du signal DS à ladite fréquence de comptage et délivrer des signaux de détection correspondants ST.

Plus précisément, comme illustré de façon très schématique sur cette figure 1, les moyens de détection de transition 10 comportent une succession de trois bascules de type D respectivement référencées 100, 101 et 102, disposées en cascade et toutes commandées par le signal d'horloge CKM. L'entrée de la première bascule 100 reçoit le signal porteur DS. Les sorties des deux dernières bascules 101 et 102 sont reliées à une porte logique OU exclusif référencée 103 dont la sortie délivre le signal de détection ST.

Un circuit logique 2, dont on reviendra plus en détail ci-après sur la fonctionnalité, et réalisable de façon classique à partir de portes logiques, forme des moyens de sélection 2. Ces moyens de sélection reçoivent en entrée chaque signal de détection ST délivré par les moyens de détection 10 et délivrent ou non, en fonction d'un critère de sélection prédéterminé, un signal de sélection RS. Bien entendu, l'homme du métier aura compris que le signal de sélection correspond en fait à une valeur logique prédéterminée, par exemple 1, du signal logique délivré par les moyens de sélection 2.

Des moyens de commande d'échantillonnage 3 comportent notamment un compteur modulo n (en l'espèce modulo 10) référencé 30 et cadencé par le signal d'horloge de comptage CKM. La sortie de ce compteur 30, c'est-à-dire sa valeur courante de comptage est prise en compte d'une part par les moyens de sélection 2 d'une manière détaillée ci-après et, d'autre part, par des moyens logiques 31, de réalisation classique. Ces moyens 31 sont aptes à comparer la valeur courante de comptage SC à une première valeur de comptage prédéterminée correspondant à un premier nombre de périodes du signal d'horloge CKM, et par conséquent à un retard temporel Tr prédéterminé pour, lorsque la valeur courante du compteur atteint ce premier nombre, délivrer un signal de commande d'échantillonnage SCH à une bascule d'échantillonnage ECH permettant d'échantillonner le signal DS.

On se réfère maintenant plus particulièrement aux figures 2 à 4 pour décrire plus en détail un mode de mise en oeuvre de la commande d'échantillonnage selon l'invention.

On suppose sur la figure 2 que toutes les transitions détectées TD du signal DS sont effectivement prises en compte par les moyens de commande d'échantillonnage. En d'autres termes, on suppose ici que toute transition détectée est une transition sélectionnée donnant lieu à l'émission par les moyens de sélection d'un signal de sélection RS. A la réception de chaque signal de sélection RS, le compteur 30 est initialisé à une valeur initiale de comptage, par exemple 1, puis compte au rythme des fronts montants du signal d'horloge de comptage CKM. Au bout d'un premier nombre prédéterminé de périodes de ce signal de comptage, c'est-à-dire lorsque le compteur a atteint une première valeur de comptage, par exemple la valeur 5, correspondant au retard temporel Tr qui est inférieur à la moitié T/2 de la période de transmission T (afin de ne pas masquer une prochaine transition TD telle que dessinée sur la figure 2), un signal d'échantillonnage SCH est délivré.

Par ailleurs, lorsque le compteur 30 atteint sa valeur finale de comptage, en l'espèce 10, il est réinitialisé à sa valeur initiale. Dans ces conditions, comme illustré sur la figure 2, après qu'un premier signal d'échantillonnage SCH1 ait été délivré à l'issue du retard temporel Tr après la détection d'une transition, un deuxième signal d'échantillonnage SCH2 sera automatiquement délivré lorsque le compteur 30 aura de nouveau atteint sa première valeur de comptage, c'est-à-dire à l'issue de la durée Tm égale à n fois la période de comptage, et ce bien qu'aucune autre transition n'ait été détectée. Ceci permet donc un échantillonnage correct du signal DS lorsque deux informations binaires de valeurs logiques différentes se succèdent.

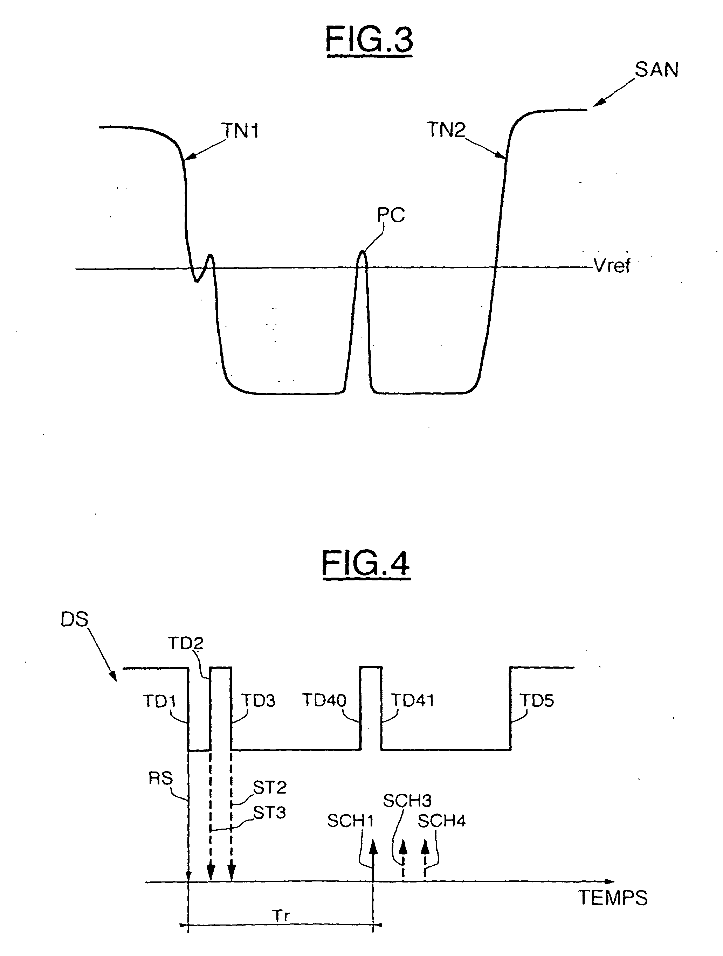

Bien que la valeur du retard Tr puisse être, dans certaines applications, prise égale à zéro, il est particulièrement avantageux de la choisir non nulle, pour tenir compte des distorsions éventuellement importantes du signal analogique SAN, tel qu'illustré schématiquement sur la figure 3.

Sur cette figure 3, on voit qu'une transition TN1 du signal analogique SAN, correspondant à un codage proprement dit d'une information binaire, peut se traduire par un premier franchissement de la tension Vref suivie d'un deuxième franchissement rapproché dans l'autre sens de cette transition Vref, puis d'un troisième franchissement dans le sens opposé. De même, le signal SAN peut présenter, entre deux transitions TN1 et TN2, un pic parasite PC dont le niveau peut se situer au-dessus de la tension de référence Vref.

On voit donc, comme illustré sur la figure 4, que la transition TN1 du signal analogique SAN se traduit par trois transitions rapprochées TD1, TD2 et TD3 du signal DS tandis que le pic parasite PC se traduit par deux transitions parasites TD40 et TD41 du signal DS.

Afin de minimiser le risque d'échantillonner le signal DS sur des nivaux parasites du signal DS, c'est-à-dire pour notamment ne pas risquer d'échantillonner le signal DS entre les transitions TD2 et TD3, on choisira un retard temporel Tr par exemple égal au quart de la période de transmission T. En d'autres termes, on choisira comme première valeur de comptage du compteur, la valeur 5 si le compteur compte de 1 à 10.

De même, il est préférable de ne pas réinitialiser le compteur sur les transitions parasites TD2 et TD3. Aussi, les moyens de sélection 2, recevant les signaux de détection ST2 et ST3 ne délivrent pas, en réponse à ces signaux, un signal de sélection permettant de réinitialiser le compteur 30. En pratique, on fixe un deuxième nombre prédéterminé de périodes du signal de comptage CKM correspondant à une deuxième valeur de comptage du compteur. Le circuit logique de sélection 2 reçoit alors d'une part le signal de détection ST et d'autre part compare la valeur courante du compteur à cette deuxième valeur de comptage pour ne délivrer un signal de sélection permettant de réinitialiser ce compteur, que si la valeur courante du compteur est supérieure ou égale à cette deuxième valeur de comptage.

Enfin, il est possible que le signal d'échantillonnage SCH1, délivré par les moyens de commande d'échantillonnage à l'issue du retard Tr après une transition détectée TD1, conduise à l'échantillonnage du pic parasite PC du signal SAN (transitions TD40 et TD41 du signal DS).

Pour remédier à cet inconvénient, on peut prévoir un suréchantillonnage du signal DS entre les transistors TD4 et TD5. En d'autres termes, les moyens 31 peuvent comparer la valeur courante du compteur non seulement à la première valeur de comptage du compteur correspondant au retard temporel Tr, mais à au moins une autre valeur de comptage, supérieure à la première, de façon à délivrer au moins un autre signal de commande d'échantillonnage SCH3, SCH4. Les trois valeurs d'échantillonnage (par exemple) correspondant aux trois signaux SCH1, SCH3 et SCH4, seront ensuite traitées par une logique majoritaire permettant une élimination de la valeur d'échantillonnage fausse du pic PC.

L'invention permet donc la réalisation d'un dispositif numérique très simple de commande d'échantillonnage conduisant à un échantillonnage toujours bien aligné avec les transitions du signal, et ce même si la fréquence réelle de transmission des informations binaires est sujette à des variations.

## Revendications

1. Dispositif de commande de l'échantillonnage d'un signal comportant une succession de transitions de niveau (TD) représentatives d'un codage bi-phase d'informations binaires transmises par ce signal (DS) selon une fréquence de transmission (F) prédéterminée, **caractérisé par le fait qu'**il comprend
des moyens de génération (4) d'un signal horloge de comptage (CKM) dont la fréquence est inférieure ou égale à n fois le double de la fréquence de transmission,
des moyens de détection (10) pour détecter les transistions (TD) du signal (DS) à ladite fréquence de comptage et délivrer des signaux de détection correspondants (ST),
des moyens de sélection (2) pour recevoir chaque signal de détection (ST) et délivrer ou non un signal de sélection (RS) en fonction de la satisfaction ou non d'un critère de sélection prédéterminé,
des moyens de commande d'échantillonnage (3) comportant des moyens de division de fréquence par n (30) recevant le signal d'horloge de comptage et aptes, à la réception de chaque signal de sélection à délivrer un premier signal de commande d'échantillonnage (SCH1) après un retard temporel prédéterminé (Tr) inférieur à la moitié de la période de transmission des informations binaires et, en l'absence de tout nouveau signal de sélection au cours d'une durée d'espacement (Tm) égale à n fois la période de comptage, un deuxième signal de commande d'échantillonnage (SCH2) temporellement espacé du premier signal de commande d'échantillonnage de cette durée d'espacement (Tm).

2. Dispositif selon la revendication 1, **caractérisé par le fait que** la fréquence du signal de comptage est inférieure à n fois le double de la fréquence de transmission et supérieure à n-1 fois le double de la fréquence de transmission.

3. Dispositif selon la revendication 1 ou 2, **caractérisé par le fait que** n est un entier supérieur ou égal à 3, par exemple égal à 10.

4. Dispositif selon l'une quelconques des revendications 1 à 3, **caractérisé par le fait que** les moyens de division de fréquence comportent un compteur modulo n (30) cadencé par le signal d'horloge de comptage, initialisable à une valeur initiale de comptage en présence de chaque signal de sélection (RS), chaque signal de commande d'échantillonnage étant délivré à chaque fois que le compteur (30) atteint une première valeur de comptage.

5. Dispositif selon la revendication 4, **caractérisé par le fait que** le retard temporel (Tr) est égal à un premier nombre prédéterminé de périodes du signal de comptage (CKM), et **par le fait que** la différence entre la première valeur de comptage et la valeur initiale de comptage correspond à ce premier nombre prédéterminé de périodes.

6. Dispositif selon la revendication 4 ou 5, **caractérisé par le fait que** les moyens de commande d'échantillonnage (3) sont aptes à délivrer au moins un autre signal de commande d'échantillonnage (SCH3, SCH4) à chaque fois qu'au moins une troisième valeur de comptage, supérieure à la première, est atteinte.

7. Dispositif selon l'une des revendications précédentes, **caractérisé par le fait que** les moyens de sélection (3) comportent des moyens aptes à comptabiliser la durée séparant deux transitions détectées consécutives (TD), le critère de sélection consistant à vérifier que cette durée est supérieure ou égale à une durée de latence prédéterminée.

8. Dispositif selon les revendications 4 et 7, **caractérisé par le fait que** la durée de latence est égale à un deuxième nombre prédéterminé de périodes du signal de comptage (CKM) et **par le fait que** les moyens de sélection (2) comportent des moyens de comparaison aptes à comparer la valeur courante du compteur avec une deuxième valeur de comptage prédéterminée, la différence entre la deuxième valeur de comptage et la valeur initiale de comptage correspondant à ce deuxième nombre prédéterminé de périodes.

## Patentansprüche

1. Vorrichtung zur Steuerung der Abtastung eines Signals, das eine Reihenfolge von Pegelübergängen (TD) aufweist, die eine Biphasenkodierung von binären Informationen repräsentiert, die von diesem Signal (DS) gemäß einer vorgegebenen Übertragungsfrequenz (F) übertragen werden, **dadurch gekennzeichnet, daß** die Vorrichtung aufweist:
Einrichtungen (4) zur Erzeugung eines Zähltaktsignals (CKM), dessen Frequenz kleiner oder gleich n-mal das Doppelte der Übertragungsfrequenz ist,
Erfassungseinrichtungen (10), um in der Zählfrequenz die Übergänge (TD) des Signals (DS) zu erfassen und entsprechende Erfassungssignale (ST) auszugeben,
Auswahleinrichtungen (2), um jedes Erfassungssignal (ST) zu empfangen und um abhängig von der Erfüllung oder Nichterfüllung eines vorgegebenen Auswahlkriteriums ein Auswahlsignal (RS) auszugeben oder nicht auszugeben,
Einrichtungen zur Abtaststeuerung (3) mit Einrichtungen zur Teilung der Frequenz durch n (30), die das Zähltaktsignal empfangen und in der Lage sind, bei jedem Empfang eines Auswahlsignals ein erstes Abtaststeuersignal (SCH1) nach einer vorgegebenen Zeitverzögerung (Tr), die kleiner ist als die Hälfte der Übertragungsperiode der binären Informationen, auszugeben, und bei jeder Abwesenheit eines neuen Auswahlsignals während einer Abstandsdauer (Tm), die gleich n-mal die Zählperiode ist, ein zweites Abtaststeuersignal (SCH2) auszugeben, das um diese Abstandsdauer (Tm) zeitlich zum ersten Abtaststeuersignal beabstandet ist.

2. Vorrichtung nach Anspruch 1, **dadurch gekennzeichnet, daß** die Frequenz des Zählsignals kleiner ist als n-mal das Doppelte der Übertragungsfrequenz und größer ist als (n-1)-mal das Doppelte der Übertragungsfrequenz.

3. Vorrichtung nach Anspruch 1 oder 2, **dadurch gekennzeichnet, daß** n eine ganze Zahl größer oder gleich 3, zum Beispiel gleich 10, ist.

4. Vorrichtung nach einem der Ansprüche 1 bis 3, **dadurch gekennzeichnet, daß** die Frequenzteilungseinrichtungen einen von dem Zähltaktsignal getakteten Modulo-n-Zähler (30) aufweisen, der bei jeder Anwesenheit eines Auswahlsignals (RS) auf einen Zählanfangswert initialisierbar ist, wobei jedesmal, wenn der Zähler (30) einen ersten Zählwert erreicht, jedes Abtaststeuersignal ausgegeben wird.

5. Vorrichtung nach Anspruch 4, **dadurch gekennzeichnet, daß** die Zeitverzögerung (Tr) gleich einer vorgegebenen ersten Anzahl von Perioden des Zählsignals (CKM) ist, und **dadurch**, daß die Differenz zwischen dem ersten Zählwert und dem Anfangszählwert dieser vorgegebenen ersten Anzahl von Perioden entspricht.

6. Vorrichtung nach Anspruch 4 oder 5, **dadurch gekennzeichnet, daß** die Abtaststeuereinrichtungen (3) in der Lage sind, jedesmal, wenn mindestens ein dritter Zählwert, der größer als der erste ist, erreicht wird, mindestens ein weiteres Abtaststeuersignal (SCH3,SCH4) auszugeben.

7. Vorrichtung nach einem der vorstehenden Ansprüche, **dadurch gekennzeichnet, daß** die Auswahleinrichtungen (3) Einrichtungen aufweisen, die in der Lage sind, die Zeitdauer, die zwei aufeinanderfolgende erfaßte Übergänge (TD) trennt, zu vermerken, wobei das Auswahlkriterium darin besteht, zu prüfen, daß diese Dauer größer oder gleich einer vorgegebenen Latenzdauer ist.

8. Vorrichtung nach Anspruch 4 und Anspruch 7, **dadurch gekennzeichnet, daß** die Latenzdauer gleich einer vorgegebenen zweiten Anzahl von Perioden des Zählsignals (CKM) ist, und **dadurch**, daß die Auswahleinrichtungen (2) Vergleichseinrichtungen aufweisen, die in der Lage sind, den laufenden Wert des Zählers mit einem vorgegebenen zweiten Zählwert zu vergleichen, wobei die Differenz zwischen dem zweiten Zählwert und dem Anfangszählwert dieser vorgegebenen zweiten Anzahl von Perioden entspricht.

## Claims

1. Device for controlling the sampling of a signal comprising a succession of transitions of level (TD) which are representative of a two-phase coding of binary information transmitted by this signal (DS) according to a predetermined transmission frequency (F), **characterized in that** it comprises
means (4) of generating a counting clock signal (CKM) whose frequency is less than or equal to n times twice the transmission frequency,
detection means (10) for detecting the transitions (TD) of the signal (DS) at the said counting frequency and for delivering corresponding detection signals (ST),
selection means (2) for receiving each detection signal (ST) and for delivering or otherwise a selection signal (RS) depending on the satisfying or otherwise of a predetermined selection criterion,
sampling control means (3) comprising means of frequency division by n (30) which receive the counting clock signal and are able, on receipt of each selection signal, to deliver a first sampling control signal (SCH1) after a predetermined time delay (Tr) which is less than half the period of transmission of the binary information and, in the absence of any new selection signal in the course of a spacing duration (Tm) equal to n times the counting period, a second sampling control signal (SCH2) temporally spaced from the first sampling control signal by this spacing duration (Tm).

2. Device according to Claim 1, **characterized in that** the frequency of the counting signal is less than n times twice the transmission frequency and greater than n-1 times twice the transmission frequency.

3. Device according to Claim 1 or 2, **characterized in that** n is an integer greater than or equal to 3, for example equal to 10.

4. Device according to any one of Claims 1 to 3, **characterized in that** the frequency division means comprise a counter modulo n (30) clocked by the counting clock signal, which can be initialized to an initial counting value in the presence of each selection signal (RS), each sampling control signal being delivered whenever the counter (30) reaches a first counting value.

5. Device according to Claim 4, **characterized in that** the time delay (Tr) is equal to a first predetermined number of periods of the counting signal (CKM), and **in that** the difference between the first counting value and the initial counting value corresponds to this first predetermined number of periods.

6. Device according to Claim 4 or 5, **characterized in that** the sampling control means (3) are able to deliver at least one other sampling control signal (SCH3, SCH4) whenever at least a third counting value, greater than the first, is reached.

7. Device according to one of the preceding claims, **characterized in that** the selection means (3) comprise means able to reckon the duration separating two consecutive detected transitions (TD), the selection criterion consisting in verifying that this duration is greater than or equal to a predetermined latency duration.

8. Device according to Claims 4 and 7, **characterized in that** the latency duration is equal to a second predetermined number of periods of the counting signal (CKM) and **in that** the selection means (2) comprise comparison means able to compare the current value of the counter with a second predetermined counting value, the difference between the second counting value and the initial counting value corresponding to this second predetermined number of periods.
